# EUROPEAN PATENT APPLICATION

(11) **EP 3 545 779 A1**
(43) Date of publication of application: **02.10.2019**
(21) Application number: 17873787.0
(22) Date of filing: 14.11.2017
(51) Int. Cl.: A24F 47/00

(54) **UPPER COVER ASSEMBLY, ATOMIZER, AND ELECTRONIC CIGARETTE**

(30) Priority: 22.11.2016 CN 201621261122 U
(71) Applicant: Joyetech Europe Holding GmbH, 6303 Zug (CH)
(72) Inventor: QIU, Weihua, Changzhou Jiangsu 213125 (CN)
(74) Representative: Zaboliene, Reda
(86) International application number: PCT/CN2017/110850
(87) International publication number: WO 2018/095243

(57) **Abstract**

An upper cover assembly (100), an atomizer, and an electronic cigarette thereof. The upper cover assembly (100) comprises a top cover (2) and an air regulation ring (3). An air intake hole (201) and a liquid filling hole (210) are formed in the top over (2), and an air regulation hole (301) is formed in the air regulation ring (3). When the air regulation ring (3) is mounted on the top cover (2), the air regulation ring (3) blocks the liquid filling hole (210) and the air regulation ring (3) can rotate relative to the top cover (2), so that the air regulation hole (301) and the air intake hole (201) communicate with or stagger with each other. When the air regulation ring (3) is separated from the top cover (2), the liquid filling hole (210) communicates with the outside world. The function for filling a liquid and regulating air by a same component is implemented, the structure of the atomizer is simplified, and the number of assembling components of the atomizer is reduced, thereby simplifying mounting steps, reducing production costs, and facilitating operations.

## Description

### TECHNICAL FIELD

The present disclosure relates to the technical field of electronic cigarettes, and in particular, to an upper cover assembly, an atomizer and an electronic cigarette.

### BACKGROUND

The existing electronic cigarette supplies power to the heating member in the atomizer through the battery assembly, so that the heating member heats the cigarette liquid under the driving of the battery assembly to generate smoke, thereby enabling the user to obtain a smoking experience.

However, in the existing electronic cigarette, the liquid-filling structure and the gas-regulating structure in the atomizer are basically realized by two different structures. Thus, the structure of the atomizer is complicated, and the parts are numerous, which makes the production cost of the atomizer expensive and the operation of the atomizer inconvenient.

### SUMMARY

The present disclosure provides an upper cover assembly. By providing a liquid injection hole and an air inlet hole on the top cover and by providing an air adjustment hole on the air adjusting ring, the upper cover assembly realizes the functions of liquid injection and air adjustment simultaneously. The present disclosure also provides an atomizer including the upper cover assembly, and an electronic cigarette including the upper cover assembly or the atomizer.

The first aspect of the present disclosure provides an atomizer including an upper cover assembly, a lower cover assembly, a liquid storage pipe and an atomizing head assembly. The atomizing head assembly is disposed in the liquid storage pipe. An upper end of the atomizing head assembly is connected to the upper cover assembly, and a lower end of the atomizing head assembly is connected to the lower cover assembly. Two ends of the liquid storage pipe are respectively connected to the upper cover assembly and the lower cover assembly. A liquid storage chamber is formed between the upper cover assembly, the liquid storage pipe and the lower cover assembly. The upper cover assembly includes a top cover and an air adjusting ring. The air adjusting ring is rotatably sleeved on an outer periphery of the top cover. The top cover includes a cylindrical connecting portion and a mounting portion integrally formed outwardly from a side wall of the connecting portion along the circumferential direction. The air adjusting ring includes an outer ring seat and an inner ring seat integrally formed outwardly from a bottom edge of the outer ring seat along the circumferential direction. A side wall of the connecting portion is provided with an air inlet hole, and a side wall of the outer ring seat is provided with an air adjustment hole corresponding to the air inlet hole. The mounting portion is provided with a liquid injection hole, and the liquid injection hole communicates with the liquid storage chamber. When the air adjusting ring is sleeved on the top cover, the inner ring seat seals the liquid injection hole, and when the air adjusting ring is detached from the top cover, the liquid injection hole is exposed to the outside.

Further, the upper cover assembly further includes a sealing member. A bottom of the inner ring seat is provided with a receiving groove. The sealing member is disposed in the receiving groove. When the air adjusting ring is sleeved on the top cover, the sealing member seals the liquid injection hole.

Further, a first thread is provided on an outer wall of the connecting portion at a position adjacent to the mounting portion. A second thread corresponding to the first thread is provided on an inner wall of the outer ring seat. An undercut groove is provided in the outer wall of the connecting portion below the first thread. When the air adjusting ring is screwed clockwise along the first thread to the end, the second thread on the inner wall of the outer ring seat enters the undercut groove, to realize installation of the air adjusting ring on the top cover.

Further, the upper cover assembly further includes a connecting member. The connecting member is installed in the connecting portion and communicates with the atomizing head assembly.

Further, the atomizing head assembly includes a fixing member and an atomizing head. The fixing member is a hollow structure. An upper end of the fixing member is detachably mounted to a lower end of the top cover. The atomizing head is installed in the fixing member, and a top end of the atomizing head is connected to a bottom end of the connecting member.

Further, the atomizing head includes an upper cover and a sheath. The upper cover is disposed at a top end of the sheath, and the upper cover is in communication with the connecting member. The atomizing head further includes a first electrode contact member and a first insulating member. The first insulating member is mounted at a bottom of the sheath, and the first electrode contact member passes through the first insulating member to seal the bottom of the sheath. The first insulating member electrically insulates the first electrode contact member from the sheath.

Further, a side wall of the sheath is provided with a concave groove. A liquid inlet hole is provided in the concave groove. The concave groove cooperates with the fixing member to form a liquid inlet passage. The liquid inlet passage communicates the liquid storage chamber with the liquid inlet hole.

Further, the atomizing head further includes a first sealing ring, and the first sealing ring is mounted between the upper cover and the connecting member.

Further, a bottom outer edge of the mounting portion is provided with a clamping groove, and an upper end of the liquid storage pipe is engaged in the clamping groove.

The second aspect of the present disclosure provides an electronic cigarette including the atomizer according to the first aspect of the present disclosure and a battery assembly, wherein the battery assembly is electrically connected to the atomizer.

The third aspect of the present disclosure provides an upper cover assembly. The upper cover assembly includes a top cover and an air adjusting ring. The top cover is provided with an air inlet hole and a liquid injection hole. The air adjusting ring is provided with an air adjustment hole. The air adjusting ring seals the liquid injection hole when the air adjusting ring is installed on the top cover. The air adjusting ring is rotatable relative to the top cover such that the air adjustment hole is communicated with or staggered from the air inlet hole. The liquid injection hole is exposed to the outside when the air adjusting ring is detached from the top cover.

Further, the top cover includes a connecting portion and a mounting portion extending outward from a side wall of the connecting portion. The air adjusting ring includes an outer ring seat and an inner ring seat extending outward from a bottom edge of the outer ring seat. The liquid injection hole is defined in the mounting portion. When the air adjusting ring is installed on the top cover, the outer ring seat is sleeved on the connecting portion and the inner ring seat seals the liquid injection hole.

Further, the air inlet hole is defined in the connecting portion or the mounting portion, and the air adjusting hole is defined in the outer ring seat or the inner ring seat.

Further, a side wall of the connecting portion is provided with a first thread and an undercut groove located below the first thread. An inner wall of the outer ring seat is provided with a second thread. When the second thread is rotated along the first thread to enter into the undercut groove, the air adjusting ring is installed in position. When the second thread is rotated from the undercut groove to the first thread and is unscrewed along the first thread, the air adjusting ring is detached from the top cover.

Further, the upper cover assembly further includes a sealing member. A bottom of the inner ring seat is provided with a receiving groove. The sealing member is disposed in the receiving groove. When the air adjusting ring is installed on the top cover, the sealing member seals the liquid injection hole.

Further, the sealing member is made of silicone or rubber.

Further, the sealing member is annular, and the receiving groove is an annular groove.

Further, the upper cover assembly further includes a connecting member. The connecting member is received in the top cover. A space between the top cover and the connecting member forms an air inlet passage. An inner space of the connecting member forms a smoke outlet passage.

The fourth aspect of the present disclosure provides an atomizer including the upper cover assembly according to the third aspect of the present disclosure.

Further, the atomizer further includes a lower cover assembly, a liquid storage pipe and an atomizing head assembly. The atomizing head assembly is disposed in the liquid storage pipe. Two ends of the liquid storage pipe are respectively connected to the upper cover assembly and the lower cover assembly. A liquid storage chamber is formed between the upper cover assembly, the liquid storage pipe and the lower cover assembly. The liquid injection hole communicates with the liquid storage chamber.

Further, the atomizing head assembly includes a fixing member and an atomizing head. An upper end of the fixing member is detachably mounted to a lower end of the top cover. The atomizing head is installed in the fixing member. A liquid inlet passage is provided between the atomizing head and the fixing member. The liquid storage chamber communicates with the atomizing head through the liquid inlet passage.

Further, the atomizing head includes a sheath. A side wall of the sheath is provided with a concave groove. A liquid inlet hole is provided in the concave groove and the liquid inlet hole communicates with an interior of the sheath. The concave groove cooperates with the fixing member to form the liquid inlet passage. The liquid inlet passage communicates the liquid storage chamber with the liquid inlet hole.

Further, the atomizing head further comprises includes a first electrode contact member and a first insulating member. The first insulating member is mounted at the bottom of the sheath. The first electrode contact member passes through the first insulating member. The first insulating member electrically insulates the first electrode contact member from the sheath.

Further, a gap isolated from the liquid inlet passage is provided between the atomizing head and the fixing member. The air inlet hole communicates with the atomizing head through the gap.

The fifth aspect of the present disclosure provides an electronic cigarette including the upper cover assembly according to the third aspect of the present disclosure.

The sixth aspect of the present disclosure provides an electronic cigarette including the atomizer according to the fourth aspect of the present disclosure.

Compared with the prior art, in the upper cover assembly, the atomizer and the electronic cigarette of the present disclosure, the air inlet holes are provided in the side wall of the connecting portion of the top cover, and the liquid injection holes are provided in the mounting portion of the top cover, such that the functions of liquid injection and air adjustment are realized by the same component. The structure of the atomizer is simplified, the parts of the atomizer are reduced, the installation steps are simplified, the production cost is reduced, and the operation is convenient.

### BRIEF DESCRIPTION OF THE DRAWINGS

The drawings are intended to provide a further understanding of the present disclosure and be a part of the description of the present disclosure. They are used to explain the present disclosure together with the following specific embodiments, but should not constitute a limitation on the present disclosure. In the drawings,
FIG. 1 is an exploded perspective view of the atomizer of the present disclosure;
FIG. 2 is a front view of the atomizer of the present disclosure;
FIG. 3 is a cross-sectional view of an atomizer of one embodiment of the present disclosure;
FIG. 4 is another cross-sectional view of the atomizer of FIG. 3;
FIG. 5 is a perspective view of the top cover of the present disclosure;
FIG. 6 is a perspective view of the air adjusting ring of the present disclosure;
FIG. 7 is a schematic view showing the cooperation of the air adjusting ring and the sealing member of the present disclosure;
FIG. 8 is a cross-sectional view of an atomizer of another embodiment of the present disclosure.

The part names and their reference signs in the drawings are:

| | |
|---|---|
| liquid storage pipe 1 | liquid storage chamber 101 |
| top cover 2 | connecting portion 20 |
| air inlet hole 201 | undercut groove 202 |
| mounting portion 21 | liquid injection hole 210 |
| clamping groove 211 | air adjusting ring 3 |
| outer ring seat 30 | air adjustment hole 301 |
| inner ring seat 31 | receiving groove 310 |
| fixing member 4 | atomizing head 5 |
| liquid inlet passage 401 | sheath 50 |
| concave groove 501 | liquid inlet hole 502 |
| upper cover 51 | first sealing ring 52 |
| first electrode contact member 53 | first insulating member 54 |
| bottom cover 6 | baffle plate 60 |
| assembling portion 61 | connecting member 7 |
| second electrode contact member 8 | third electrode contact member 9 |
| sealing member 10 | second insulating member 11 |
| third insulating member 12 | second sealing ring 13 |
| upper cover assembly 100 | lower cover assembly 200 |

### DETAILED DESCRIPTION OF PREFERRED EMBODIMENTS

The specific embodiments of the present disclosure will be described in detail below with reference to the accompanying drawings. It is understood that the specific embodiments described herein are illustrative of the present disclosure and are not intended to limit the present disclosure.

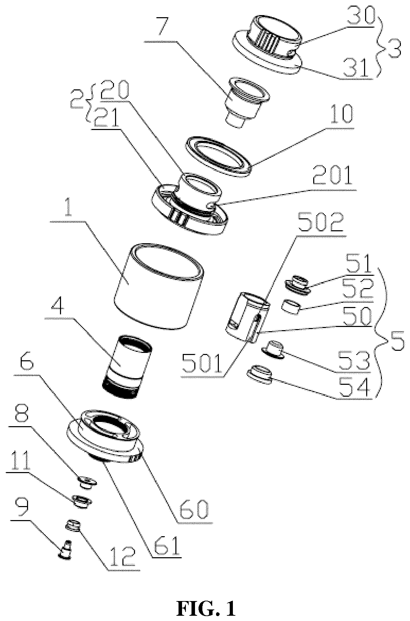

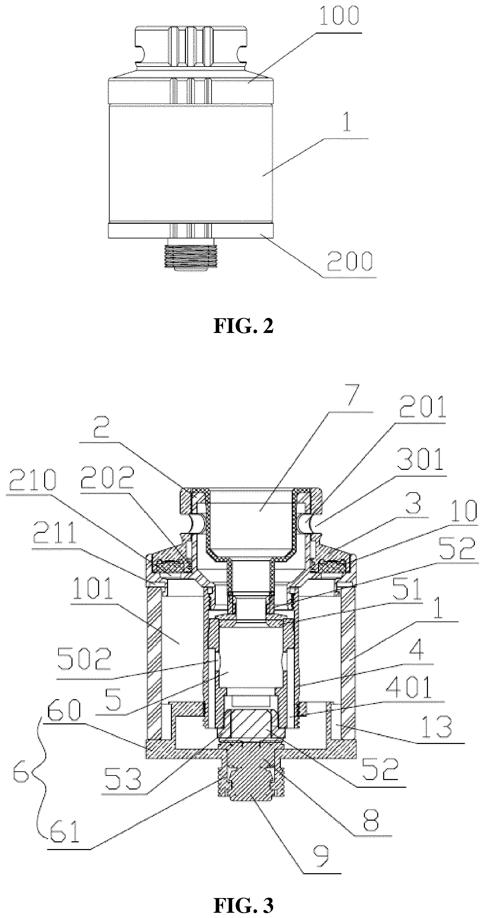

Referring to FIG. 1 to FIG. 3, the atomizer (not labeled) of the present disclosure includes an upper cover assembly 100, a lower cover assembly 200, a liquid storage pipe 1, and an atomizing head assembly (not labeled). The atomizing head assembly is disposed in the liquid storage pipe 1. An upper end of the atomizing head assembly is connected to the upper cover assembly 100, and a lower end of the atomizing head assembly is connected to the lower cover assembly 200. A liquid storage chamber 101 is formed and surrounded cooperatively by the liquid storage pipe 1, the upper cover assembly 100 and the lower cover assembly 200 for storing cigarette liquid. The upper cover assembly 100 is fixed to an upper end of the liquid storage pipe 1, and the lower cover assembly 200 is fixed to a lower end of the liquid storage pipe 1.

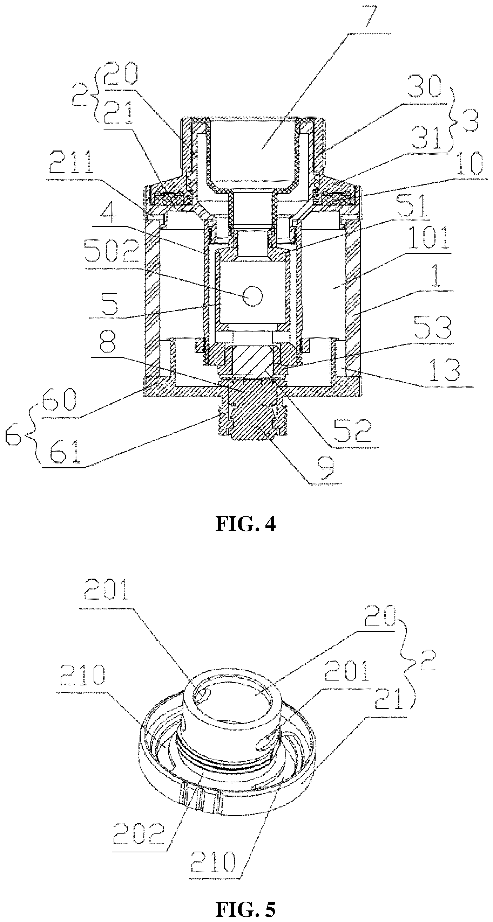

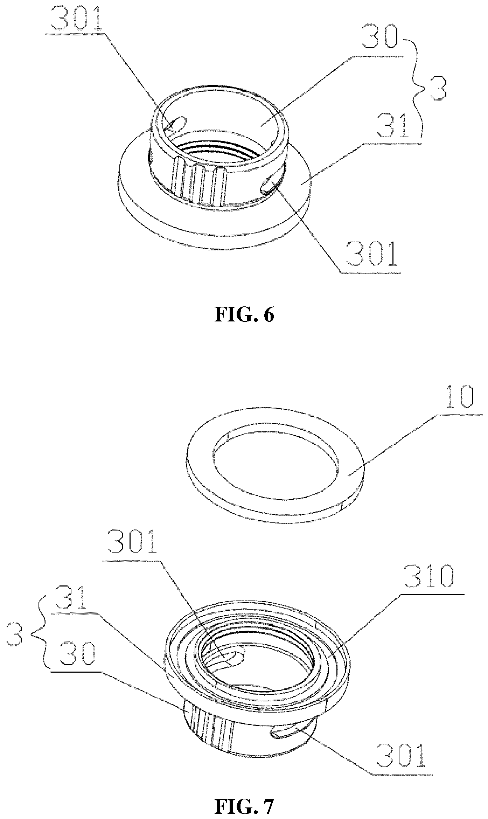

Specifically, referring to FIG. 1, FIG. 5 to FIG. 7, the upper cover assembly 100 includes a top cover 2, a sealing member 10, a connecting member 7, and an air adjusting ring 3. The air adjusting ring 3 is sleeved on the outer periphery of the top cover 2 and is rotatable relative to the top cover 2. The top cover 2 includes a cylindrical connecting portion 20 and a mounting portion 21 integrally formed outwardly from a side wall of the connecting portion 20 along the circumferential direction. Two air inlet holes 201 are defined in the side wall of the connecting portion 20, and the two air inlet holes 201 are provided along the circumferential direction of the connecting portion 20 and are located above the mounting portion 21. The mounting portion 21 is provided with a liquid injection hole 210, and the liquid injection hole 210 communicates with the liquid storage chamber 101. The connecting member 7 is mounted in the connecting portion 20 for connecting with the atomizing head 5. The air adjusting ring 3 includes an outer ring seat 30 and an inner ring seat 31 integrally formed outwardly from a bottom edge of the outer ring seat 30 along the circumferential direction. The outer ring seat 30 is sleeved on the outer periphery of the connecting portion 20, and the inner ring seat 31 is installed in the mounting portion 21. Two air adjustment holes 301 are defined in a side wall of the outer ring seat 30, and the two air adjustment holes 301 are provided along the circumferential direction of the outer ring seat 30. Each air adjustment hole 301 corresponds to one air inlet hole 201. Therefore, the amount of air intake can be adjusted by rotating the air adjusting ring 3 to change the overlapping area of the two air adjustment holes 301 and the two air inlet holes 201. It is understood that the sealing member 10 is made of an elastic material. Specifically, a material of the sealing member 10 is silicone or rubber, but it is not limited thereto.

It is understood that in other embodiments, the air inlet hole 201 may be one, three, or more. Correspondingly, the air adjustment hole 301 may also be one, three, or more.

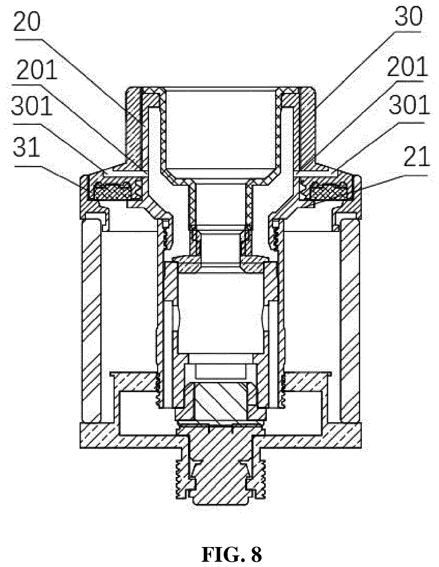

In one embodiment, as shown in FIG. 8, the air inlet hole 201 is defined in the connecting portion 20, and the air adjustment hole 301 corresponding to the air inlet hole 201 is defined in the inner ring seat 31. Further, the air adjustment hole 301 is provided above the liquid injection hole 210 and extends through the inner ring seat 31 to communicate with the air inlet hole 201. Further, the air adjustment hole 301 is L-shaped. It is understood that the specific shape of the air adjustment hole 301 is not limited.

In one embodiment, the air inlet hole 201 is defined in the mounting portion 21 and is disposed at an inner side of the liquid injection hole 210 and extends through the connecting portion 20. The air adjustment hole 301 corresponding to the air inlet hole 201 is defined in the inner ring seat 31.

In one embodiment, the air inlet hole 201 is defined in the mounting portion 21. The air inlet hole 201 is located at an inner side of the liquid injection hole 210 and extends through the connecting portion 20. The air adjustment hole 301 corresponding to the air inlet hole 201 is defined in the outer ring seat 30, and the air adjustment hole 301 extends through the inner ring seat 31.

In one embodiment, the connecting member 7 has substantially a hollow cylindrical structure, and is received in the top cover 2 and spaced apart from the top cover 2, and a space between the top cover 2 and the connecting member 7 forms an air inlet passage. The inner space of the connecting member 7 forms a smoke outlet passage. The bottom end of the connecting member 7 is detachably connected to the top end of the atomizing head 5. The air inlet passage and the smoke outlet passage are communicated with the atomizing head 7, and the air inlet passage is further communicated with the air inlet hole 201.

In one embodiment, the inner ring seat 31 can seal the liquid injection hole 210. Further, the bottom of the inner ring seat 31 is provided with a receiving groove 310. The sealing member 10 is disposed in the receiving groove 310 and sandwiched between the inner ring seat 31 and the mounting portion 21 for sealing the liquid injection hole 210. In this embodiment, the sealing member 10 is annular and the receiving groove 310 is an annular groove, to prevent the sealing member 10 from being separated from the liquid injection hole 210 during the rotation of the air adjusting ring 3. The outer wall of the connecting portion 20 is provided with a first thread. The first thread is located below the two air inlet holes 201 and above the mounting portion 21. The inner wall of the outer ring seat 30 is provided with a second thread, so that the connecting portion 20 and the outer ring seat 30 are threadedly connected, to thereby install the air adjusting ring 3 on the top cover 2. In addition, the outer wall of the connecting portion 20 is provided with an undercut groove 202 below the first thread. When the air adjusting ring 3 is screwed clockwise along the first thread to the end, the second thread on the inner wall of the outer ring seat 30 enters the undercut groove 202, to realize installation of the air adjusting ring 3 on the top cover 2. It is understood that the screwing direction is not limited, the rotation direction can also be counterclockwise. When the second thread is rotated along the first thread to enter into the undercut groove 202, the air adjusting ring 3 is installed in position. At this time, the sealing member 10 seals the liquid injection hole 210. When the air adjusting ring 3 is further rotated clockwise, the communication area between the air inlet hole 201 and the air adjustment hole 301 is changed, thereby achieving control of the amount of air intake. Conversely, when the air adjusting ring 3 is rotated in the reverse direction, that is, counterclockwise in this embodiment, the air adjusting ring 3 is unscrewed along the first thread. When the second thread is rotated to the first thread from the undercut groove 202 and finally unscrewed along the first thread, the air adjusting ring 3 is detached from the top cover 2. At this time, the liquid injection hole 210 is exposed, so that the cigarette liquid can be injected into the liquid storage chamber 101 through the liquid injection hole 210.

Referring to FIG. 1, FIG. 3 and FIG. 4, the atomizing head assembly includes a fixing member 4 and an atomizing head 5. The fixing member 4 is a hollow structure, and the atomizing head 5 is installed in the fixing member 4. The atomizing head 5 includes an upper cover 51, a first sealing ring 52, a sheath 50, a first electrode contact member 53, and a first insulating member 54. The upper cover 51 is fixed in the top opening of the sheath 50, and the upper cover 51 communicates with the connecting member 7. The first sealing ring 52 is mounted between the upper cover 51 and the connecting member 7, and functions as a seal to prevent smoke from leaking into the air inlet passage. The first insulating member 54 is mounted at the bottom of the sheath 50, and the first electrode contact member 53 passes through the first insulating member 54 to seal the bottom of the sheath 50. The first insulating member 54 electrically insulates the first electrode contact member 53 from the sheath 50. The side wall of the sheath 50 is provided with a concave groove 501, a liquid inlet hole 502 is provided in the concave groove 501, and the liquid inlet hole 502 is located at the upper end of the concave groove 501. The concave groove 501 forms a liquid inlet passage 401 between the sheath 50 and the fixing member 4. The cigarette liquid in the liquid storage chamber 101 can flow through the liquid inlet passage 401 to the liquid inlet hole 502, and then flows from the liquid inlet hole 502 to the interior of the sheath 50. That is, the liquid inlet passage 401 communicates the liquid storage chamber 101 with the liquid inlet hole 502.

The lower cover assembly 200 includes a bottom cover 6, a second electrode contact member 8, a third electrode contact member 9, a second insulating member 11, and a third insulating member 12. A baffle plate 60 is formed at the junction of the bottom cover 6 and the liquid storage pipe 1. The lower end of the liquid storage pipe 1 is fixed on the baffle plate 60, so that the bottom cover 6 seals the lower end of the liquid storage pipe 1. Further, a second sealing ring 13 is mounted between the lower end of the liquid storage pipe 1 and the bottom cover 6, to seal the gap between the liquid storage pipe 1 and the bottom cover 6 for preventing leakage of the cigarette liquid. The bottom outer edge of the mounting portion 21 is provided with a clamping groove 211, and the upper end of the liquid storage pipe 1 is engaged in the clamping groove 211, so that the top cover 2 seals the upper end of the liquid storage pipe 1, thereby sealing the liquid storage chamber 101. In addition, the lower end of the top cover 2 is connected to the upper end of the fixing member 4 by threads. The lower end of the fixing member 4 is also connected to the upper end of the bottom cover 6 by threads. The lower end of the bottom cover 6 is provided with an assembling portion 61 protruding downward. The second electrode contact member 8 and the third electrode contact member 9 are both disposed in the assembling portion 61. The lower end of the second electrode contact member 8 is in contact with the third electrode contact member 9. The upper end of the second electrode contact member 8 is in contact with the first electrode contact member 53. The lower end of the third electrode contact member 9 is used for electrically contacting a positive electrode of a battery assembly (not shown) of the electronic cigarette. The second insulating member 11 is sleeved on the second electrode contact member 8 to electrically insulate the second electrode contact member 8 from the bottom cover 6. The third insulating member 12 is sleeved on the third electrode contact member 9 to electrically insulate the third electrode contact member 9 from the bottom cover 6.

When injecting cigarette liquid into the atomizer of the present disclosure, the air adjusting ring 3 is rotated counterclockwise. At this time, due to the elastic action of the sealing member 10, the air adjusting ring 3 is unscrewed along the first thread, and the liquid injection hole 210 is exposed, so that the cigarette liquid is injected into the liquid storage chamber 101 through the liquid injection hole 210. After the liquid injection is finished, the air adjusting ring 3 is screwed clockwise along the first thread to the end, so that the second thread on the inner wall of the outer ring seat 30 enters into the undercut groove 202 to realize installation, and the sealing member 10 seals the liquid injection hole 210. It is understood that in other embodiments, the thread direction may be reversed, and the air adjusting ring 3 is screwed counterclockwise along the first thread to the end.

The working principle of the atomizer of the present disclosure is as follows. The cigarette liquid in the liquid storage chamber 101 flows through the liquid inlet passage 401 to the liquid inlet hole 502, and then flows through the liquid inlet hole 502 to the liquid guiding member (not shown) in the sheath 50. When the atomizer is energized, the heating member (not shown) in the sheath 50 is electrically driven to heat the cigarette liquid on the liquid guiding member (not shown) to form smoke. The user sucks through the connecting member 7. The external air enters from the air adjustment hole 301 and the air inlet hole 201, and then flows into the sheath 50 through the air inlet passage and a gap between the fixing member 4 and the sheath 50 to bring out the atomized smoke, wherein the gap is isolated from the liquid inlet passage 401. Finally, the smoke flows out from the inner space of the connecting member 7 for the user to inhale.

The present disclosure also provides an electronic cigarette including the above atomizer and a battery assembly (not shown). The battery assembly is electrically connected to the bottom of the atomizer. Specifically, the positive electrode of the battery assembly is in electrical contact with the third electrode contact member 9, thereby achieving an electrical connection between the atomizer and the battery assembly. When the electronic cigarette is in operation, the battery assembly supplies power to the atomizer, so that the atomizing head 5 heats and atomizes the cigarette liquid, and the user then sucks through the connecting member 7.

In summary, in the atomizer and the electronic cigarette of the present disclosure, the air inlet holes 201 are provided in the side wall of the connecting portion 20 of the top cover 2, and the liquid injection holes 210 are provided in the mounting portion 21 of the top cover 2. After the air adjusting ring 3 is screwed clockwise along the first thread to the end, the second thread on the inner wall of the outer ring seat 30 enters into the undercut groove 202 to realize installation of the air adjusting ring 3 on the top cover 2. At this time, the liquid injection hole 210 is sealed by the sealing member 10. When the air adjusting ring 3 is further rotated clockwise, the communication area between the air inlet hole 201 and the air adjustment hole 301 is changed, to realize control of the air intake amount. Conversely, when the air adjusting ring 3 is rotated counterclockwise, due to the elastic action of the sealing member 10, the air adjusting ring 3 is unscrewed along the first thread, the liquid injection hole 210 is exposed, and the cigarette liquid is injected into the liquid storage chamber 101 through the liquid injection hole 210. Thus, the functions of liquid injection and air adjustment are realized by the same component. The structure of the atomizer is simplified, the parts of the atomizer are reduced, the installation steps are simplified, the production cost is reduced, and the operation is convenient.

Any combination of different embodiments of the present disclosure should be considered as disclosed by the present disclosure as long as it does not contradict the technical idea of the present disclosure. Within the scope of the technical idea of the present disclosure, simple variations to the technical solution and any combination of different embodiments that do not contradict the technical idea of the present disclosure should be within the scope of the present disclosure.

## Claims

1. An upper cover assembly, comprising a top cover (2) and an air adjusting ring (3), wherein the top cover (2) is provided with an air inlet hole (201) and a liquid injection hole (210), the air adjusting ring (3) is provided with an air adjustment hole (301), the air adjusting ring (3) seals the liquid injection hole (210) when the air adjusting ring (3) is installed on the top cover (2), the air adjusting ring (3) is rotatable relative to the top cover (2) such that the air adjustment hole (301) is communicated with or staggered from the air inlet hole (201), the liquid injection hole (210) is exposed to the outside when the air adjusting ring (3) is detached from the top cover (2).

2. The upper cover assembly according to claim **1**, wherein the top cover (2) comprises a connecting portion (20) and a mounting portion (21) extending outward from a side wall of the connecting portion (20), the air adjusting ring (3) comprises an outer ring seat (30) and an inner ring seat (31) extending outward from a bottom edge of the outer ring seat (30), the liquid injection hole (210) is defined in the mounting portion (21), when the air adjusting ring (3) is installed on the top cover (2), the outer ring seat (30) is sleeved on the connecting portion (20) and the inner ring seat (31) seals the liquid injection hole (210).

3. The upper cover assembly according to claim **2**, wherein the air inlet hole (201) is defined in the connecting portion (20) or the mounting portion (21), and the air adjusting hole (301) is defined in the outer ring seat (30) or the inner ring seat (31).

4. The upper cover assembly according to claim **2** or **3**, wherein a side wall of the connecting portion (20) is provided with a first thread and an undercut groove (202) located below the first thread, an inner wall of the outer ring seat (30) is provided with a second thread, when the second thread is rotated along the first thread to enter into the undercut groove (202), the air adjusting ring (3) is installed in position, when the second thread is rotated from the undercut groove (202) to the first thread and is unscrewed along the first thread, the air adjusting ring (3) is detached from the top cover (2).

5. The upper cover assembly according to claim **2** or **3**, wherein the upper cover assembly (100) further comprises a sealing member (10), a bottom of the inner ring seat (31) is provided with a receiving groove (310), the sealing member (10) is disposed in the receiving groove (310), when the air adjusting ring (3) is installed on the top cover (2), the sealing member (10) seals the liquid injection hole (210).

6. The upper cover assembly according to claim **5**, wherein the sealing member (10) is made of silicone or rubber.

7. The upper cover assembly according to claim **5**, wherein the sealing member (10) is annular, and the receiving groove (310) is an annular groove.

8. The upper cover assembly according to any one of claims **1** to **3**, wherein the upper cover assembly (100) further comprises a connecting member (7), the connecting member (7) is received in the top cover (2), a space between the top cover (2) and the connecting member (7) forms an air inlet passage, an inner space of the connecting member (7) forms a smoke outlet passage.

9. An atomizer comprising the upper cover assembly (100) according to any one of claims **1** to **8.**

10. The atomizer according to claim **9**, wherein the atomizer further comprises a lower cover assembly (200), a liquid storage pipe (1) and an atomizing head assembly, the atomizing head assembly is disposed in the liquid storage pipe (1), two ends of the liquid storage pipe (1) are respectively connected to the upper cover assembly (100) and the lower cover assembly (200), a liquid storage chamber (101) is formed between the upper cover assembly (100), the liquid storage pipe (1) and the lower cover assembly (200), and the liquid injection hole (210) communicates with the liquid storage chamber (101).

11. The atomizer according to claim **10**, wherein the atomizing head assembly comprises a fixing member (4) and an atomizing head (5), an upper end of the fixing member (4) is detachably mounted to a lower end of the top cover (2), the atomizing head (5) is installed in the fixing member (4), a liquid inlet passage (401) is provided between the atomizing head (5) and the fixing member (4), the liquid storage chamber (101) communicates with the atomizing head (5) through the liquid inlet passage (401).

12. The atomizer according to claim **11**, wherein the atomizing head (5) comprises a sheath (50), a side wall of the sheath (50) is provided with a concave groove (501), a liquid inlet hole (502) is provided in the concave groove (501) and the liquid inlet hole (502) communicates with an interior of the sheath (50), the concave groove (501) cooperates with the fixing member (4) to form the liquid inlet passage (401), the liquid inlet passage (401) communicates the liquid storage chamber (101) with the liquid inlet hole (502).

13. The atomizer according to claim **12**, wherein the atomizing head (5) further comprises a first electrode contact member (53) and a first insulating member (54), the first insulating member (54) is mounted at the bottom of the sheath (50), the first electrode contact member (53) passes through the first insulating member (54), the first insulating member (54) electrically insulates the first electrode contact member (53) from the sheath (50).

14. The atomizer according to any one of claims **11** to **13**, wherein a gap isolated from the liquid inlet passage (401) is provided between the atomizing head (5) and the fixing member (4), the air inlet hole (201) communicates with the atomizing head (5) through the gap.

15. An electronic cigarette comprising the atomizer according to any one of claims **9** to **14.**
